# EUROPÄISCHE PATENTSCHRIFT

(11) **EP 0 340 379 B1**
(45) Veröffentlichungstag und Bekanntmachung des Hinweises auf die Patenterteilung: **02.06.1993**
(21) Anmeldenummer: 89100248.7
(22) Anmeldetag: 09.01.1989
(51) Int. Cl.: B09B 5/00, A62D 3/00

(54) **Verfahren zum Reinigen von mit hydrophoben organischen Substanzen verunreinigten Böden**
Process for cleaning soil contaminated by hydrophobic organic substances
Procédé pour purifier un sol contaminé par des composés organiques hydrophobiques

(30) Priorität: 04.05.1988 DE 3815164
(43) Veröffentlichungstag der Anmeldung: 08.11.1989
(73) Patentinhaber: Chemisches Laboratorium Dr. Erwin Wessling, D-48341 Altenberge (DE)
(72) Erfinder: Wessling, Erwin, Dr., D-4417 Altenberge (DE)
(74) Vertreter: Schulze Horn, Stefan, Dipl.-Ing. M.Sc.

(56) Entgegenhaltungen:
- EP-A- 0 070 593
- DE-A- 3 600 772
- DE-A- 3 626 145
- US-A- 4 167 973
- US-A- 4 593 760
- US-A- 4 670 634
- US-A- 4 730 672

## Beschreibung

Die Erfindung betrifft ein Verfahren zum Reinigen von mit hydrophoben organischen Substanzen verunreinigten Böden.

Es sind Verfahren bekannt, mit dem Böden, in denen mittel-und schwerflüchtige Kohlenwasserstoffe vorliegen, gereinigt werden. Hierfür ist es erforderlich, den verseuchten Boden abzutragen, mechanisch zu zerkleinern und anschließend die verunreinigenden Substanzen zu extrahieren. Dabei kommt der Boden mit einem Lösungsmittel in innigen Kontakt. Das Lösungsmittel wird daraufhin von dem Boden wieder getrennt, wobei in ihm die schwer- und mittelflüchtigen Substanzen in hohem Maße gelöst sind. Der geeinigte Boden wird anschließend wieder auf der ursprünglichen Entnahmestelle verteilt.

Nachteilig bei diesem Verfahren ist der hohe apparative Aufwand und die damit verbundenen Kosten. Dadurch wird das Verfahren nur bei wenigen Geländen angewendet, andere verunreinigte Böden bleiben unbehandelt.

Es stellt sich daher die Aufgabe, ein Verfahren anzubieten, mit dem hydrophobe mittel- und schwerflüchtige Substanzen aus Böden, besonders aus aufgelassenen Industrie- und Deponiegeländen, entfernt werden können. Dabei soll das Verfahren geringen Geräteaufwand erfordern und einen geringen Energieverbrauch aufweisen, wodurch sich beträchtliche Kostenersparnisse gegenüber bisherigen Verfahren ergeben. Die hydrophoben mittel- und schwerflüchtigen Substanzen, die in sehr vielen Fällen hochtoxisch sind, sollen in weniger gefährliche Schadstoffe oder auch in Naturprodukte umgewandelt werden, die mit herkömmlichen Methoden aufgefangen und unschädlich gemacht werden können.

Diese Aufgabe wird erfindungsgemäß durch das Verfahren gemäß Anspruch 1 gelöst.

Mit einem derartigen Verfahren werden vielfältige Vorteile erzielt. Das Ozon wird durch dieses Verfahren mit dem Trägermedium in Form des Gases direkt an die organischen Substanzen herangeführt. Es reagiert dort mit allen oxidierbaren Verbindunge, wobei für das funktionsgemäße Verfahren die mittel- und schwerflüchtigen, hydrophoben Substanzen wesentlich sind. Durch die Oxidation dieser Substanzen werden die großen Moleküle in mehrere kleinere umgewandelt, die leichter flüchtig sind. Aufgrund ihrer geringeren Siedepunkte können diese chemisch veränderten Spaltprodukte leichter in die Gasphase übertreten und durch die bewegte Luft abtransportiert werden.

Als Reaktionsprodukte treten je nach den Bedingungen der Ausgangsstoffe Aldehyde, Ketone und/oder Karbonsäuren, daneben auch die Endprodukte Kohlendioxid und Wasser auf. Aldehyde, Ketone und Karbonsäuren lassen sich leicht von der Luft abtrennen. Diese Substanzen beinhalten weiterhin den Vorteil, daß sie weit weniger gefährlichen Klassen als die Edukte zugeordnet werden.

Die Verwendung von Gas hat den weiteren Vorteil, daß aufgrund der geringen Viskosität und der geringen Diffusionsgeschwindigkeit das Ozon schnell an die im Boden vorhandenen Schadstoffe gelangen kann.

Bei einer Reinigung im größeren Rahmen ist mit einer 50%igen Reduktion der Kosten zu rechnen, die für die Kippgebühren des vergleichbaren Bodens auf einer Sondermülldeponie erforderlich wären.

Bei dem Verfahren ergibt sich der Vorteil, daß es auch auf organische Substanzen angewandt werden kann, die in flüssiger oder fester Form vorliegen. Normalerweise sind feste, besonders in kristalliner Form vorliegende Substanzen einer Aufarbeitung schwer zugänglich. Hier bleibt üblicherweise nur ein Verbrennen als einzige Methode übrig, um diese organischen Substanzen zu vernichten.

Die eingeleitete Luft ist vorteilhafterweise atmosphärische Luft, die komprimiert, getrocknet und ionisiert wird. Die hierfür erforderliche Anlage ist als Stand der Technik bekannt.

Eine weitere Ausführungsform des Verfahrens kann darin bestehen, daß nach einer Einleitung von mit Ozon versetztem Gas die Ozon-Konzentration in dem eingeleiteten Gas erhöht wird. Bei einigen Reinigungsverfahren wurde beobachtet, daß die Kohlenwasserstoff-Konzentration im Boden nicht mehr meßbar abnahm, wenn die Behandlung mit Ozon über mehrere Tage erfolgt war. Wurde jedoch anschließend die Ozon-Konzentration in der eingeleiteten Luft erhöht, war eine weitere Reduktion der Kohlenwasserstoffe (hierbei kann es sich selbstverständlich auch um substituierte Derivate handeln) zu verzeichnen.

Die Ozon-Konzentration kann bei der Gaseinleitung einen Wert von 0,01 g pro m³ bis zur maximalen Ozonanreicherung im Gas enthalten. Dabei muß in den einzelnen Fällen berücksichtigt werden, welche Verweildauer das Gas im Boden haben wird. Dadurch ergibt sich die zur Verfügung stehende Reaktionszeit des Ozons. Die optimale Konzentration an Ozon ist abhängig von den verunreinigenden Verbindungen und ebenfalls auch von den daneben vorliegenden Stoffen, die ebenfalls oxidiert werden. Die Beschaffenheit des Bodens, z. B. die Korngröße, die Porösität, beeinflußt weiterhin die Reaktionsfähigkeit der verunreinigenden Substanzen mit dem Ozon. Während der Ozonbehandlung strebt die Konzentration der Schadstoffe auch bei konstanten Verfahrensbedingungen Grenzwerte an, die durch Reaktionszeit und die Konzentration der Reaktionspartner vorgegeben sind.

Bei sehr harten und kompakten Böden ist es vorteilhaft, wenn der verunreinigte Boden vor dem Absaugen des Gases und der Zuleitung von mit Ozon versetztem Gas mechanisch gelockert wird. Dabei sind Mikrorisse und Bruchspalten erstrebenswert, durch die das Gas samt Ozon in allen Bereichen des Bodens gelangen kann.

Weiterhin kann der Boden abgetragen werden und in besonders dafür geeigneten Anlagen gereinigt werden. Hierfür ist es vorteilhaft, den Boden zuvor durch Brechwerkzeuge zu zerkleinern. Nach der Reinigung kann der Boden wieder auf die Entnahmestellen aufgetragen werden.

Somit kann je nach Erfordernis der Boden in situ oder nach Abtragen in einer speziell dafür vorgesehenen Anlage aufgearbeitet werden.

Bei einer zu groben Körnung des Bodens wird die Einwirkzeit des Ozons unverhältnismäßig verlängert, so daß in derartigen Fällen ein kostenaufwendiges mechanisches Aufbrechen des Bodens dennoch wirtschaftlich vertretbar ist.

Damit die in der abgesaugten Luft sich befindlichen Reaktionsprodukte nicht in die Atmosphäre gelangen, ist es vorteilhaft, wenn die abgesaugte Luft durch Filtrierung, Absorption, Adsorption, Waschen oder weiteren chemischen Reaktionen von den Reaktionsprodukten des Oxidationsmittels befreit wird.

Anhand von Beispielen soll das erfinderische Verfahren weiter verdeutlicht werden. Dabei wird eine Behandlung mit Ozon einer ohne Ozon gegenübergestellt. Bei diesen Beispielen werden Bodenproben verwandt, die entweder künstlich verseucht wurden oder verunreinigten Böden entnommen wurden. Damit Messungen durchgeführt werden konnten, mußten die Konzentrationen an verunreinigenden Verbindungen in der gesamten Bodenprobe konstant sein. Dieses wurde durch mechanisches Mischen erzielt. Die Bodenproben wurden in Behältern von etwa 0,4 m x 0,2 m x 0,2 m gefüllt. Die Zuluft wurde durch ein dem Gefäßboden aufliegendes Leitungssystem verteilt. Über den Leitungen war ein Sieb angeordnet, auf dem der zu reinigende Boden auflag. Aus dem über dem Boden befindlichen Luftraum wurde die Abluft abgesaugt. Es versteht sich von selbst, daß bei einer in situ Reinigung von größeren Bodenmengen mit in den Boden eingeführten Luftlanzen gearbeitet wird, um ein gezieltes und effektvolles Vorbeistreichen der Luft an den Bodenpartikeln zu erzielen.

### Beispiel I

Eine Bodenprobe über 10 kg besaß bei Versuchsbeginn einen Ölgehalt von 10300 mg/kg Bodengewicht. 24 Tage lang wurde der Boden mit Luft versorgt. Dabei wurde der Gehalt an Öl auf 4100 mg/kg reduziert. Anschließend wurde der Boden in zwei Ansätzen zu je 5 kg aufgeteilt und in beiden Fällen auf ein Gasdurchsatz von 0,1 m³/h eingestellt. Jedoch wurde eines der beiden Gefäße zusätzlich mit Ozon behandelt. Hier lag eine Konzentration von 0,1 g/m³ an Ozon vor. Nach 8 Tagen war in dem mit Ozon behandelten Ansatz der Ölgehalt auf 230 mg/kg zurückgegangen, während in der Kontrolle lediglich eine Abnahme auf 3840 mg/kg zu verzeichnen war. Die genauen Werte sind der Tabelle I oder der Figur 1 zu entnehmen.

### Beispiel II

In einem weiteren Beispiel (vgl. Tabelle II und Figur 2) wurde derselbe verseuchte Boden wie zuvor verwandt. Auch hier wurde anfänglich der Boden einem Luftstrom ausgesetzt. Nach 4 Tagen wurden zwei Ansätze von je 2,5 kg gebildet. Dabei wurden der Testansatz und der Kontrollansatz mit 0,05 m³/h durchströmt. Zusätzlich wurde bei dem Testansatz noch die Luft mit Ozon (0,05 g/m³) versetzt. Durch die Ozonbehandlung ließen sich die Werte an Öl auf 185 mg/kg senken. Dagegen wurde der Wert von 3950 mg/kg bei der Kontrolle auch nach 24 Tagen nicht unterschritten. Eine deutliche Reduzierung der Ölbestandteile ist durch die zusätzliche Beschickung der eingeleiteten Luft mit Ozon zu erzielen gewesen.

### Beispiel III

Bei diesem Beispiel wurden Bodenproben behandelt und untersucht, die mit polycyclischen aromatischen Kohlenwasserstoffen durchsetzt waren. Nachdem der Boden 9 Tage lang einem Luftstrom ausgesetzt worden war, wurde er in zwei gleiche Ansätze von 3,5 kg aufgeteilt. Dabei wurde einer der Ansätze, der Testansatz, mit Luft und Ozon durchströmt, wobei der Luftdurchsatz 0,1 m³/h bei einem Ozongehalt von 2 g/m³ betrug. Die Kontrolle wurde lediglich mit Luft durchströmt (Durchsatz: 0,1 m³/h). Nach 14 weiteren Tagen lag eine deutliche Differenz zwischen beiden Ansätzen vor. Während der Testansatz mit Ozonbehandlung einen Gehalt an polycyclischen aromatischen Kohlenwasserstoffen von 317 mg/kg aufwies, lag der Kontrollansatz bei 820 mg/kg. Die genaueren Werte sind der Tabelle III oder der Figur 3 zu entnehmen.

### Beispiel IV

In einem weiteren Beispiel wird Boden eines aufgelassenen Industriegeländes behandelt und untersucht. Auf diese Bodenpartie war jahrelang Öl getropft. Nach der Stillegung des Betriebes war die Bodenstelle der Luft für Jahre ausgesetzt. Eine derartige Probe, wie sie den tatsächlichen Bedingungen von aufgelassenen Industriegeländen entspricht, wurde 9 Tage mit Luft behandelt. Dabei wurde deutlich, daß eine Exponierung des Bodens an der Luft keine Wirkung auf die Konzentration an Öl aufwies. Nach den 9 Tagen wurde der Boden in zwei Parallelansätzen von je 3,5 kg aufgeteilt. Eine Probe wurde mit Luft und mit Ozon behandelt (Gasdurchsatz: 0,1 m³/h; Ozongehalt 2 g/m³) und der entsprechende Kontrollansatz wurde nur mit Luft (Gasdurchsatz 0,1 m³/h) in Kontakt gebracht. Nach weiteren zwei Wochen war eine deutliche Differenz zwischen den beiden Verfahren sichtbar. Während die Ölrückstände allein durch Luftbehandlung nicht extrahiert werden konnten, wurde der Gehalt durch die Ozonbehandlung um etwa 85 % gesenkt (vgl. Tabelle IV oder Figur 4).

Bei all diesen Beispielen muß davon ausgegangen werden, daß die Vorrichtung zum Reinigen absichtlich nicht optimiert worden ist. Durch einen ausgefeilten apparativen Aufbau und eine Optimierung des Ozongehalts bezüglich der speziellen verunreinigenden Verbindungen lassen sich die Reaktionszeit reduzieren und die Reinigung noch steigern.

Bei den Beispielen wird deutlich, daß das Belüftungsverfahren kombiniert mit der Ozonbehandlung zwar auch bei leicht flüchtigen Verbindungen eingesetzt werden kann, daß jedoch die Vorteile dieses Verfahrens erst bei den mittel- und schwerflüchtigen Substanzen zum Tragen kommen. Bei den zuletzt genannten Verbindungen versagt eine lediglich mit Luft durchgeführte Belüftung. Die Substanzen weisen Siedepunkte auf, die ein Verflüchtigen der Substanzen verhindern. Erst recht ist ein derartiges Verfahren anzuwenden, wenn die Kohlenwasserstoffe in auskristallisierter Form vorliegen.

Es wird deutlich, daß für die hydrophoben, mittel- und schwerflüchtigen organischen Verbindungen das erfindungsgemäße Verfahren zur Reinigung optimal herangezogen werden kann, wodurch auch Problemböden aus aufgelassenen Industrie- und Deponiegeländen dekontaminiert werden können. Da weiterhin dieses Verfahren finanziell nicht sonderlich aufwendig ist, ist in diesem erfindungsgemäßen Verfahren ein beträchtlicher Beitrag zum Umweltschutz zu sehen.

**Tabelle I**

| Meßwerttabelle | | | |
|---|---|---|---|
| belüftet | | belüftet und O₃ behandelt | |
| Laufz. in Tage | KW*-Gehalt in mg/kg | Laufz. in Tage | KW*-Gehalt in mg/kg |
| Start | 10300 | | |
| 4 | 5920 | | |
| 8 | 5620 | | |
| 14 | 4320 | | |
| 26 | 4120 | | |
| 25 | 4100 | Start | 4100 |
| | | 2 | 2490 |
| 29 | 3900 | 4 | 320 |
| 32 | 3840 | 8 | 230 |
| | | 14 | 200 |

| | | | |
|---|---|---|---|
| *KW = Ölgehalt | | | |

**Tabelle II**

| Meßwerttabelle | | | |
|---|---|---|---|
| belüftet | | belüftet und O₃ behandelt | |
| Laufz. in Tage | KW*-Gehalt in mg/kg | Laufz. in Tage | KW*-Gehalt in mg/kg |
| Start | 10300 | | |
| 1 | 7960 | | |
| 2 | 6670 | | |
| 5 | 5200 | Start | 5200 |
| 8 | 3480 | 3 | 4760 |
| 9 | 4270 | 4 | 3860 |
| 10 | | 5 | 2810 |
| 14 | 4200 | 9 | 1500 |
| 18 | | 13 | 710 |
| 21 | | 16 | 190 |
| 24 | 3950 | 19 | 185 |

| | | | |
|---|---|---|---|
| *KW = Ölgehalt | | | |

**Tabelle III**

| Meßwerttabelle | | | |
|---|---|---|---|
| belüftet | | belüftet und O₃ behandelt | |
| Laufz. in Tage | PAK*-Gehalt in mg/kg | Laufz. in Tage | PAK*-Gehalt in mg/kg |
| Start | 1927 | | |
| 3 | 1100 | | |
| 7 | 1083 | | |
| 10 | 1015 | Start | 1015 |
| 13 | 925 | 3 | 550 |
| 19 | 705 | 9 | 325 |
| 24 | 820 | 14 | 317 |

| | | | |
|---|---|---|---|
| *PAK = Polycyclische aromatische Kohlenwasserstoffe | | | |

**Tabelle IV**

| Meßwerttabelle | | | |
|---|---|---|---|
| belüftet | | belüftet und O₃ behandelt | |
| Laufz. in Tage | KW*-Gehalt in mg/kg | Laufz. in Tage | KW*-Gehalt in mg/kg |
| Start | 80 | | |
| 3 | 60 | | |
| 7 | 74 | | |
| 10 | 82 | Start | 82 |
| 13 | 85 | 3 | 36 |
| 19 | (96) | 9 | 17 |
| 24 | 83 | 14 | |
| | | 15 | 12 |

| | | | |
|---|---|---|---|
| *KW = Ölgehalt | | | |

## Patentansprüche

1. Verfahren zum Reinigen von mit mittel- bis schwerflüchtigen hydrophoben organischen Substanzen verunreinigten Böden durch Einleiten eines Ozon enthaltenden Gases in den Boden und Absaugen der dabei entstehenden oxidierten flüchtigen Produkte.

2. Verfahren nach Anspruch 1, dadurch gekennzeichnet, daß nach einer Phase der Einleitung von mit Ozon versetztem Gas die Ozon-Konzentration in dem eingeleiteten Gas erhöht wird.

3. Verfahren nach Anspruch 1 oder 2, dadurch gekennzeichnet, daß ein Gas mit einer Ozon-Konzentration von 0,01 g pro m³ bis zur maximalen Ozonanreicherung eingeleitet wird.

4. Verfahren nach einem der Ansprüche 1 bis 3, dadurch gekennzeichnet, daß der verunreinigte Boden vor dem Absaugen des Gases und der Zuleitung von mit Ozon versetztem Gas mechanisch gelockert wird.

5. Verfahren nach einem der Ansprüche 1 bis 4, dadurch gekennzeichnet, daß das abgesaugte Gas durch Filterung, Absorption, Adsorption, Waschen oder weitere chemische Reaktionen von den im Boden entstandenen oxidierten Reaktionsprodukten befreit wird.

## Claims

1. Process for cleaning soil contaminated with medium to low volatile hydrophobic organic substances by passing an ozone containing gas into the soil and sucking off the oxygenated volatile products generated therein.

2. Process according to claim 1, characterized in that after a phase of passing in gas with ozone added the concentration of ozone in the passed in gas is increased.

3. Process according to claim 1 or 2, characterized in that a gas with a concentration of ozone from 0,01 g/cbm up to the maximal ozone enrichment is passed in.

4. Process according to one of the claims 1 to 3, characterized in that the contaminated soil is mechanically loosened prior to sucking off the gas and feeding gas with ozone added.

5. Process according to one of the claims 1 to 4, characterized in that the sucked off gas is cleared of oxygenated reaction products generated in the soil by filtration, absorption, washing or further chemical reactions.

## Revendications

1. Procédé de nettoyage de sols souillés par des substances organiques moyennement volatiles ou peu volatiles par introduction dans le sol d'un gaz contenant de l'ozone et aspiration des produits volatils oxydés se formant.

2. Procédé selon la revendication 1, caractérisé en ce qu'après une phase d'introduction de gaz additionné d'ozone, on élève la concentration de l'ozone dans le gaz introduit.

3. Procédé selon les revendications 1 ou 2, caractérisé en ce qu'on introduit un gaz ayant une concentration en ozone de 0,01 g/m³ jusqu'à l'enrichissement maximum en ozone.

4. Procédé selon l'une des revendications 1 à 3, caractérisé en ce qu'on ameublit mécaniquement le sol souillé avant l'aspiration du gaz et l'introduction de gaz additionné d'ozone.

5. Procédé selon l'une des revendications 1 à 4, caractérisé en ce que le gaz aspiré est débarrassé par filtration, absorption, adsorption, lavage ou d'autres réactions chimiques, des produits de réaction oxydés formés dans le sol.
